# EUROPÄISCHE PATENTSCHRIFT

(11) **EP 3 480 030 B1**
(45) Veröffentlichungstag und Bekanntmachung des Hinweises auf die Patenterteilung: **13.05.2020**
(21) Anmeldenummer: 17200109.1
(22) Anmeldetag: 06.11.2017
(51) Int. Cl.: B44C 5/04, B05D 1/36

(54) **VERFAHREN ZUR HERSTELLUNG EINER ABRIEBFESTEN HOLZWERKSTOFFPLATTE UND PRODUKTIONSLINIE HIERFÜR**
METHOD OF PRODUCING AN ABRASION RESISTANT WOOD-BASED PANEL AND PRODUCTION LINE FOR SAME
PROCÉDÉ DE FABRICATION D'UN PANNEAU RÉSISTANT À L'USURE AU MATÉRIAU DÉRIVÉ DU BOIS ET LIGNE DE PRODUCTION CORRESPONDANTE

(43) Veröffentlichungstag der Anmeldung: 08.05.2019
(73) Patentinhaber: Flooring Technologies Ltd., Kalkara SCM1001 (MT)
(72) Erfinder: DENK, Andre, 16909 Wittstock/Dosse (DE); GEORGE, Maika, 76547 Sinzheim (DE); PFEIFFER, Sabrina, 16866 Kyritz (DE); BURGMANN, Björn, 17255 Wesenberg (DE)
(74) Vertreter: Maikowski & Ninnemann Patentanwälte Partnerschaft mbB

(56) Entgegenhaltungen:
- EP-A1- 2 314 381
- EP-A1- 2 977 219
- EP-A1- 3 246 175
- WO-A1-2007/042258

## Beschreibung

Die vorliegende Erfindung betrifft ein Verfahren zur Herstellung einer abriebfesten mit einer Dekorschicht versehenen Holzwerkstoffplatte und eine Produktionslinie zur Durchführung dieses Verfahrens.

### Beschreibung

Eine Vielzahl von Produkten bzw. Produktoberflächen, die durch mechanische Beanspruchung einer Abnutzung ausgesetzt sind, müssen durch das Aufbringen von verschleißhemmenden Schichten, vor einer vorzeitigen Beschädigung oder Zerstörung durch Verschleiß geschützt werden. Bei diesen Produkten kann es sich z. B. um Möbeln, Innenausbauplatten, Fußböden usw. handeln. Je nach Beanspruchungsfrequenz und - stärke müssen dabei unterschiedliche Schutzmaßnahmen angewendet werden, damit dem Nutzer eine möglichst lange Nutzungsdauer garantiert werden kann.

Eine Vielzahl der oben genannten Produkte besitzen dekorative Oberflächen, die bei Verschleiß aufgrund intensiver Nutzung schnell unansehnlich erscheinen und/oder sich nicht mehr reinigen lassen. Diese dekorativen Oberflächen bestehen sehr häufig aus mit duroplastischen Harzen imprägnierten Papieren, die in sogenannten Kurztaktpressen auf die verwendeten Holzwerkstoffträger aufgepresst werden. Als duroplastisches Harz kommt sehr häufig Melamin-Formaldehyd-Harz zum Einsatz. Die Dekorschichten können auch im Tiefdruckverfahren aufgedruckt werden, wobei eine Abdeckung der Dekorschicht z.B. mit strahlungshärtbaren Lacken erfolgen kann (WO 2007/042258 A1).

Ein Ansatz zur Verbesserung der Verschleißfestigkeit von dekorativen Oberflächen besteht im Auftrag bzw. Einbringen von abriebfesten Partikeln in die oberflächennahen Harzschichten. Dies kann z.B. durch den Auftrag eines abriebfeste Partikel enthaltenden Flüssigharzes auf die entsprechenden Oberflächen, wobei im Falle von dekorativen Holzwerkstoffplatten meist Korundpartikel als abriebfeste Partikel, verwendet werden. Bei dem Auftrag von korundhaltigem Melaminharz hat sich allerdings gezeigt, dass durch die Dichteunterschiede zwischen dem Melaminharz und dem Korund Probleme durch Sedimentation auftreten. Dies führt zu Ablagerungen in Ansatzbehältern, Pumpen, Rohrleitungen und den Walzenauftragsaggregaten. Deswegen muss zum einen der gesamte Bereich häufig durch Reinigen von den Ablagerungen befreit werden und zum anderen auch zur Erreichung eines bestimmten Verschleißwertes mit einem höheren Korundauftrag gearbeitet werden. Zusätzlich führt die angesprochene Sedimentation zu Inhomogenitäten in den Auftragswerken, was ebenfalls durch eine Höherdosierung kompensiert werden muss. Ein weiterer gravierender Nachteil dieser Technologie ist, dass durch die korundhaltigen Harzrezepturen ein erheblicher Verschleiß an allen Anlagenteilen auftritt, die mit der Harzrezeptur in Kontakt kommen. Die Höherdosierung in Kombination mit den Sedimentationsproblemen wiederum führt bei höheren Verschleißklassen zu einer schlechteren Transparenz. Dies macht sich besonders bei dunklen Dekoren negativ bemerkbar.

Zur Vermeidung der Sedimentation der Korundpartikel im Flüssigharz und der damit verbundenen Probleme besteht ein anderer Ansatz zum Auftragen der abriebfesten Partikel darin, dass diese auf eine noch flüssige Harzschicht, die auf die Holzwerkstoffplatte aufgetragen wurde, mittels einer geeigneten Vorrichtung aufzustreuen. Hierbei zeigt sich, dass die Korundpartikel nicht sofort und vollständig in die Harzschicht eindringen, sondern teilweise lose aufeinander liegen. Die losen Korundpartikel können von nachfolgenden Luftströmungen, wie beispielsweise im Falle eines nachgelagerten Umlufttrockners, der die feuchte Melaminharzschicht trocknet, abgeblasen werden, wodurch dieses Korund der bestimmungsgemäßen Funktion (Abrieb) verloren geht und statt dessen für Verschleiß in nachgelagerten Anlagenteilen, wie beispielsweise dem Trockner führen.

Für die Produktion ergeben sich somit verschiedene Nachteile. So wurde beobachtet, dass es aufgrund von elektrostatischer Aufladung der Korundpartikel die Ausbildung eines homogenen Streuvorhanges verhindert wird. Des Weiteren führt die Aufwirbelung im Konvektionstrockner zu einem Korundverlust und erfordert eine erhöhte Korundmenge; der Trockner wird durch den Korund verschmutzt; schneller Verschleiß der Transportketten im Trockner durch Korund; d.h. insgesamt erhöhte Materialkosten durch Korundverlust und Kettenverschleiß. Zudem bewirkt die starke Luftströmung im Trockner eine Verteilung des Feinkorunds in der Produktionshalle, was eine Gesundheitsgefährdung für die anwesenden Mitarbeiter darstellt. Auch kann es zu Produktionsausfall durch Verschmutzung der optischen Sensoren der Anlage durch Korundstaub kommen.

Der vorliegenden Erfindung liegt daher die technische Aufgabe zugrunde, die oben angeführten Nachteile des bisherigen Ansatzes zum Aufstreuen von abriebfesten Partikel auf mit Flüssigharz beschichtete Holzwerkstoffplatten zu vermeiden und zu verbessern.

Die gestellte Aufgabe wird erfindungsgemäß durch ein Verfahren mit den Merkmalen des Anspruchs 1 und einer Produktionslinie mit den Merkmalen des Anspruchs 9 gelöst.

Demnach wird ein Verfahren zur Herstellung einer abriebfesten Holzwerkstoffplatte mit einer Oberseite und einer Unterseite, wobei auf der Oberseite mindestens eine Dekorschicht, insbesondere als Druckdekor, vorgesehen ist, bereitgestellt, welches die folgenden Schritte umfasst:
- Auftragen von mindestens einer ersten flüssigen duroplastischen Harzschicht auf die mindestens eine Dekorschicht auf der Oberseite der Holzwerkstoffplatte, wobei die mit der Dekorschicht versehene Holzwerkstoffplatte vor dem Auftrag der ersten flüssigen Harzschicht nicht erwärmt wird,
   - gleichmäßiges Aufstreuen von abriebfesten Partikeln auf die erste flüssige Harzschicht auf der Oberseite der Holzwerkstoffplatte;
   - wobei die mit den abriebfesten Partikeln versehene erste flüssige Harzschicht auf der Oberseite der Holzwerkstoffplatte nach dem Auftrag nicht getrocknet wird, und
   - Auftragen von mindestens einer zweiten Harzschicht auf die mit den abriebfesten Partikeln versehene erste, flüssige feuchte Harzschicht auf der Oberseite der Holzwerkstoffplatte,
   - anschließendes Trocknen des Aufbaus aus erster Harzschicht und zweiter Harzschicht auf der Oberseite der Holzwerkstoffplatte in mindestens einer Trocknungsvorrichtung.

Das vorliegende Verfahren ermöglicht demnach die Bereitstellung von mit einer Dekorschicht versehenen Holzwerkstoffplatten in verschiedenen Formaten mit hoher Verschleißfestigkeit in einer kostengünstigen Weise. Gemäß dem vorliegenden Verfahren wird eine erste Harzschicht, insbesondere in Form einer ersten duroplastischen Harzschicht, wie einer Melamin-Formaldehyd-Harzschicht, auf die Dekorschicht (vorbehandelt oder nichtvorbehandelt) der Holzwerkstoffplatte aufgebracht. Es erfolgt zunächst kein Trocknen oder Antrocknen der ersten Harzschicht, sondern vielmehr werden die abriebfesten Partikel auf die nasse bzw. noch flüssige erste Harzschicht auf der Oberseite der Holzwerkstoffplatte gleichmäßig unter Verwendung einer geeigneten Streuvorrichtung aufgestreut. Da die erste Harzschicht zum Zeitpunkt des Aufstreuens noch flüssig vorliegt, können die abriebfesten Partikel in die Harzschicht einsinken. Anschließend (d.h. ohne Zwischentrocknung der ersten Harzschicht mit den darauf aufgestreuten abriebfesten Partikeln) wird auf die noch feuchte erste Harzschicht eine zweite Harzschicht aufgetragen. Dies erfolgt durch den Einbau eines zusätzlichen Auftragswerkes direkt hinter der Streumaschine (d.h. zwischen dem ersten Trockner und der Streumaschine). Das zusätzlich eingebaute Auftragswerk nimmt mit seinem Walzauftrag die nicht auf der ersten Harzschicht befestigten bzw. nicht in die erste Harzschicht eingedrungenen abriebfesten Partikel auf und transportiert es zurück in das Harzauftragswerk. Dort stellt sich eine Ausgleichskonzentration ein und die abgetragenen abriebfesten Partikel werden gleichmäßig über die Walze auf die nächsten Oberflächen aufgetragen. Es kommt somit zu einer Anreicherung der abriebfesten Partikel im zweiten Auftragswerk bis zu einem Gehalt von abriebfesten Partikeln von max. 10%. Neben einer Verhinderung des Wegblasens oder Aufnehmens von losen Partikeln, kann so auch die nachteilige Wirkung z.B. auf ein nachfolgendes Pressblech von aus der beschichteten Oberfläche herausragender Korundpartikel reduziert bzw. sogar weitgehend beseitigt werden.

Mit dem vorliegenden Verfahren ist eine Reduzierung des Verbrauchs an abriebfesten Material möglich, da kein Verlust der abriebfesten Partikel wie Korund im Trockner auftritt. Gleichzeitig wird eine Reduzierung der Staubbelastung der Umgebung und der offensichtlichen gesundheitlichen Belastung der Mitarbeiter; sowie Korundstaubablagerungen auf Anlagenteilen der Produktionslinie erreicht. Ein wesentlicher Vorteil ist auch die Reduzierung der Korundablagerung auf den Transportketten und somit Einsparung zusätzlicher Materialkosten durch Austausch der Ketten. Zudem werden die Standzeiten der Pressbleche beim nachgeschalteten Pressprozess zur Laminatbildung erhöht. Insgesamt werden die Verfahrenskosten aufgrund reduzierter Material- und Wartungskosten verringert. Auch müssen keine neuen Geräte / Vorrichtungen in die Produktionslinie eingebaut werden.

In einer bevorzugten Ausführungsform des vorliegenden Verfahrens wird die mit der Dekorschicht versehene Holzwerkstoffplatte vor dem Auftrag der ersten Harzschicht nicht in einem Trockner, wie z.B. einem IR Trockner, erwärmt. Dies kann durch Ausschalten eines in der Produktionslinie vorgesehenen IR-Trockners erfolgen oder es ist kein IR-Trockner in der Produktionslinie vorgesehen. Durch das Vermeiden der Erwärmung der mit einer Dekorschicht versehenen Holzwerkstoffplatte erfolgt keine elektrostatische Aufladung der Plattenoberfläche und der Streuvorhang bei Streuen des Korundes wird homogen.

Der Verzicht des Erwärmens der bedruckten Holzwerkstoffplatte in einem IR-Trockner ist für einen Fachmann nicht naheliegend, da typischerweise auf die mittels Direktdruck aufgetragenen Dekorschichten eine Schutzschicht aus einem Harz aufgetragen wird. Die Schutzschicht kann ein Formaldehyd-haltiges Harz, insbesondere ein Melamin-Formaldehyd-Harz, Harnstoff-Formaldehyd-Harz oder Melamin-Harnstoff-Formaldehyd-Harz sein und Glaskugeln (Größe 50-150 µ) als Abstandshalter für die Zwischenlagerung der Platten enthalten. Diese Schutzschicht dient einem vorläufigen Schutz der Dekorschicht zur Lagerung vor der weiteren Veredelung. Die Schutzschicht auf der Dekorschicht ist noch nicht vollständig ausgehärtet, sondern mit einer gewissen Restfeuchte von ca. 10%, bevorzugt von ca. 6%, versehen und noch weiter vernetzbar. Derartige Schutzschichten sind z.B. in der WO 2010/112125 A1, EP 2 774 770 B1 oder EP 2 977 219 A1 beschrieben.

Der typischerweise zur Anwendung kommende Schritt des Erwärmens, von mit einer derartigen (duroplastischen) Schutzschicht versehenen Dekorschichten, dient einem Antrocknen der Schutzschicht und der Einstellung des Restfeuchtegrades und somit der Klebrigkeit der Schutzschicht und der Haftung von darauffolgenden Harzschichten.

Im Falle des vorliegenden Verfahrens hat sich aber gezeigt, dass der Schritt des Erwärmens der Schutzschicht einen negativen Effekt auf das Streubild der abriebfesten Partikel hat. Ein Weglassen des Erwärmens der mit einer Schutzschicht versehenen bedruckten Holzwerkstoffplatte bewirkt eine Homogenisierung des Streubildes und somit eine gleichmäßige Verteilung der abriebfesten Partikel auf der Plattenoberfläche.

Die erste Harzschicht wird in einer Variante des Verfahrens in einer Menge zwischen 10-100 g/m², bevorzugt 40-80 g/m², insbesondere bevorzugt 45-60 g/m² aufgetragen. Der Auftrag der ersten Harzschicht erfolgt z.B. mit einer rillierten Auftragswalze in einem ersten Auftragswerk. Die Schichtdicke der ersten, auf die Dekorschicht aufgetragenen Harzschicht beträgt 10 und 100 µm, bevorzugt zwischen 40 und 80 µm, insbesondere bevorzugt zwischen 45 und 60 µm.

In einer weiteren Ausführungsform des vorliegenden Verfahrens werden als abriebfeste Partikel Partikel aus Korund (Aluminiumoxide), Borcarbide, Siliziumdioxide, Siliziumcarbide verwendet. Besonders bevorzugt sind Korundpartikel. Dabei handelt es sich in bevorzugter Weise um Edelkorund weiß mit einer hohen Transparenz, damit die optische Wirkung des darunterliegenden Dekors so wenig wie möglich nachteilig beeinflusst wird. Korund weist eine ungleichmäßige Raumform auf.

Die Menge an aufgestreuten abriebfesten Partikeln beträgt 10 bis 50 g/m², bevorzugt 10 bis 30 g/m², insbesondere bevorzugt 15 bis 25 g/m². Die Menge der aufgestreuten abriebfesten Partikel hängt von der zu erreichenden Abriebklasse ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 25 g/m². Im vorliegenden Fall weisen die fertigen Platten bevorzugt die Abriebklasse AC4 auf.

Es werden abriebfeste Partikel mit Körnungen in den Klassen F180 bis F240, bevorzugt F200 verwendet. Die Korngröße der Klasse F180 umfasst einen Bereich von 53 - 90 µm, F220 von 45-75 µm, F230 34-82 µm, F240 28-70 µm (FEPA Norm). In einer Variante werden als abriebfeste Partikel Edelkorund weiß F180 bis F240, bevorzugt in einem Hauptkornbereich von 53-90 µm verwendet. In einer besonders bevorzugten Ausführungsform werden Korundpartikel der Klasse F200 verwendet, wobei F200 eine Mischung zwischen F180 und F220 ist und einen Durchmesser zwischen 53 und 75 µm aufweist.

Die abriebfesten Partikel dürfen nicht zu feinkörnig sein (Gefahr der Staubbildung), aber auch nicht zu grobkörnig. Die Größe der abriebfesten Partikel stellt somit ein Kompromiss dar. Insgesamt sollten die Korundpartikel jedoch größer sein als die gesamte Deckschicht, um Abriebfestigkeit zu bewirken.

In einer weitergehenden Ausführungsform können silanisierte Korundpartikel verwendet werden. Typische Silanisierungsmittel sind Aminosilane

In einer weitergehenden Variante des vorliegenden Verfahrens kann das als erste Harzschicht auf die Oberseite der Holzwerkstoffplatte aufzutragende Harz Fasern, insbesondere Holzfasern oder Zellulosefasern, enthalten. Die Auftragsmenge der Fasern, wie z.B. Zellulosefasern, beträgt, wenn diese zusammen mit der ersten Harzschicht aufgebracht werden, zwischen 0,1-0,5 g/m², bevorzugt 0,2-0,4 g/m², insbesondere bevorzugt 0,25 g/m². Die Zugabe von Fasern wie Zellulosefasern zu der ersten Schicht trägt zur Erhöhung der Viskosität der Harzflotte und somit zu erhöhtem Auftrag der ersten Deckschicht auf die Holzwerkstoffplatte bei.

In einer weiteren Ausführungsform des vorliegenden Verfahrens wird die zweite auf die Oberseite der Holzwerkstoffplatte aufzutragende Harzschicht in einer Menge zwischen 10-50 g/m², bevorzugt 20-30 g/m², insbesondere bevorzugt 20-25 g/m² aufgetragen. Insgesamt ist die Menge der zweiten Harzschicht geringer als die Menge der ersten Harzschicht.

Die Gesamtmenge an erster und zweiter Harzschicht liegt zwischen 50-100 g/m², bevorzugt 60-80 g/m², insbesondere bevorzugt bei 70 g/m². So beträgt in einer Variante die Menge der ersten Harzschicht 50 g/m² und die Menge des zweiten Harzschicht 25 g/m².

Wie bereits oben erwähnt, kommt es zu einer Anreicherung der abriebfesten Partikel in der zweiten Harzschicht durch Mitnahme von losen Partikeln durch das zweite Auftragswerk. So kann sich in dem als zweite Harzschicht aufzutragenden Harz ein Gehalt an abriebfesten Partikel von 5 bis 15 Gew%, bevorzugt 10 Gew% einstellen.

In einer weiteren Ausführungsform ist die mindestens eine Holzwerkstoffplatte eine mitteldichte Faser (MDF)-, hochdichte Faser (HDF)- oder Grobspan (OSB)- oder Sperrholzplatte und/oder eine Holz-Kunststoff-Platte.

In einer Ausführungsform wird parallel zur zweiten Harzschicht auf der Oberseite der Holzwerkstoffplatte auch eine Harzschicht auf die Unterseite der Holzwerkstoffplatte aufgetragen. Die Menge der auf die Unterseite der Holzwerkstoffplatte aufgetragenen Harzschicht kann zwischen 50-100 g/m², bevorzugt 60-80 g/m², insbesondere bevorzugt 60 g/m² betragen. Bevorzugt ist die untere Harzschicht (z.B. bräunlich) eingefärbt, um einen Gegenzug zu simulieren.

Der Feststoffgehalt des für die Oberseite und die Unterseite verwendeten Harzes liegt sowohl für die Oberseite als auch die Unterseite bei 50-70 Gew%, bevorzugt 50-60 Gew%, insbesondere bevorzugt 55 Gew%.

Die zweite Harzschicht wird bevorzugt parallel bzw. gleichzeitig auf die Oberseite und Unterseite der Holzwerkstoffplatte in mindestens einer Doppelauftragsvorrichtung (Walzenauftragsaggregat) aufgetragen. Nach Auftrag der zweiten Harzschicht erfolgt eine Trocknung (Lufttrocknung) des Aufbaus aus erster und zweiter Harzschicht in einer ersten Trocknungsvorrichtung. Demnach wird mindestens eine Harzschicht auf die Unterseite der Holzwerkstoffplatte zusammen mit der auf die Oberseite der Holzwerkstoffplatte aufzutragenden zweiten Harzschicht aufgetragen.

Die auf der Unterseite aufgetragene(n) Harzschicht(en) wirken als Gegenzug. Durch das Aufbringen der Harzschichten auf die Oberseite und Unterseite der Holzwerkstoffplatten in ungefähr den gleichen Mengen wird gewährleistet, dass die durch die aufgebrachten Schichten beim Verpressen entstehenden Zugkräfte auf die Holzwerkstoffplatte sich gegenseitig aufheben. Der auf die Unterseite aufgebrachte Gegenzug entspricht im Schichtaufbau und der jeweiligen Schichtdicke ungefähr der auf der Oberseite aufgebrachten Schichtfolge mit dem Unterschied der abriebfesten Partikel und Glaskugeln wie im Folgenden im Detail erläutert wird.

In einer weiteren Ausführungsform des vorliegenden Verfahrens wird mindestens eine weitere Harzschicht, bevorzugt eine dritte, vierte, fünfte, sechste und siebente Harzschicht, auf den getrockneten Aufbau aus mit den abriebfesten Partikeln versehener erster und zweiter Harzschicht auf der Oberseite der Holzwerkstoffplatte aufgetragen und jeweils nach dem Auftrag getrocknet wird.

Es ist weiterhin bevorzugt, dass die weiteren Harzschichten Glaskugeln und/oder Fasern, insbesondere Holzfasern oder Zellulosefasern, umfassen.

So kann eine dritte Harzschicht parallel auf die Oberseite und Unterseite der Holzwerkstoffplatte aufgetragen werden, d.h. auf den jeweilig getrockneten Harzaufbau. Im Falle der Oberseite wäre dies der Harzaufbau aus erster und zweiter Harzschicht inklusive der abriebfesten Partikel und im Falle der Unterseite wäre dies eine Harzschicht.

Die Menge der auf die Oberseite der Holzwerkstoffplatte aufgetragenen dritten Harzschicht kann zwischen 10-50 g/m², bevorzugt 20-30 g/m², insbesondere bevorzugt 25 g/m² betragen.

Die Menge der auf die Unterseite der Holzwerkstoffplatte parallel aufgetragenen Harzschicht kann zwischen 30-80 g/m², bevorzugt 40-60 g/m², insbesondere bevorzugt bei 50 g/m² liegen.

Der Feststoffgehalt des für die dritte Harzschicht verwendeten Harzes liegt sowohl für die Oberseite als auch die Unterseite bei 50-70 Gew%, bevorzugt 50-60 Gew%, insbesondere bevorzugt 55 Gew%.

In einer weiteren Ausführungsform des vorliegenden Verfahrens wird jeweils mindestens eine vierte Harzschicht auf die Oberseite und parallel auf die Unterseite der Holzwerkstoffplatte aufgetragen.

Die Menge der auf die Oberseite der Holzwerkstoffplatte aufgetragenen vierten Harzschicht kann zwischen 10-40 g/m², bevorzugt 15-30 g/m², insbesondere bevorzugt 20 g/m² betragen, wobei der Feststoffgehalt zwischen 50-80 Gew%, bevorzugt 60-70 Gew%, insbesondere bevorzugt 60-65 Gew%, z.B. bei 61,5 Gew% liegt.

In einer Variante kann das als vierte Harzschicht auf die Oberseite der Holzwerkstoffplatte aufzutragende Harz Glaskugeln enthalten, wobei die Glaskugeln bevorzugt als Abstandshalter fungieren. Die bevorzugt verwendeten Glaskugeln weisen einen Durchmesser von 50-100 µm, bevorzugt von 60-80 µm auf. Die Auftragsmenge der Glaskugeln, wenn diese zusammen mit der dritten Harzschicht aufgebracht werden, beträgt 1-5 g/m², bevorzugt 2-4 g/m², insbesondere bevorzugt 3 g/m².

In einer weiteren Variante können die Glaskugeln auf die auf der Oberseite der Holzwerkstoffplatte aufgetragene vierte Harzschicht aufgestreut werden. In diesem Fall, d.h. wenn die Glaskugeln aufgestreut werden, beträgt die Auftragsmenge der Glaskugeln 5-10 g/m², bevorzugt 6-8 g/m², insbesondere bevorzugt 6 g/m².

Die Menge der auf die Unterseite der Holzwerkstoffplatte parallel aufgetragenen Harzschicht kann zwischen 20-70 g/m², bevorzugt 30-50 g/m², insbesondere bevorzugt 40 g/m² bei einem Feststoffgehalt von 50-70 Gew%, bevorzugt 50-60 Gew%, insbesondere bevorzugt 55 Gew% betragen.

Es ist ebenfalls von Vorteil, wenn die jeweils auf der Oberseite und Unterseite der Holzwerkstoffplatte aufgetragene Harzschicht in mindestens einer Trocknungsvorrichtung getrocknet wird.

Im Anschluss an den Trocknungsprozess für die vierte obere Harzschicht und parallele untere Harzschicht ist es optional möglich, jeweils mindestens eine fünfte Harzschicht auf die Oberseite und die Unterseite der Holzwerkstoffplatte aufzutragen.

Die Menge der auf die Oberseite der Holzwerkstoffplatte aufgetragenen fünften Harzschicht kann zwischen 10-40 g/m², bevorzugt 15-30 g/m², insbesondere bevorzugt 20 g/m² bei einem Feststoffgehalt von 50-80 Gew%, bevorzugt 60-70 Gew%, insbesondere bevorzugt 60-65 Gew%, z.B. 61,6 Gew% betragen.

In einer weitergehenden Variante des vorliegenden Verfahrens kann das als fünfte Harzschicht auf die Oberseite der Holzwerkstoffplatte aufzutragende Harz Glaskugeln enthalten. Im Falle der Zugabe von Glaskugeln zum aufzutragenden Harz beträgt die Auftragsmenge an Glaskugeln 1-5 g/m², bevorzugt 2-4 g/m², insbesondere bevorzugt 3 g/m².

Die Menge der auf die Unterseite der Holzwerkstoffplatte parallel aufgetragenen Harzschicht kann zwischen 10-60 g/m², bevorzugt 20-50 g/m², insbesondere bevorzugt 30 g/m² bei einem Feststoffgehalt von 50-70 Gew%, bevorzugt 50-60 Gew%, insbesondere bevorzugt 55 Gew% liegen.

In einer noch weitergehenden Variante des vorliegenden Verfahrens werden eine sechste und eine siebente Harzschicht auf die Oberseite und jeweils die dazu komplementären Harzschichten auf die Unterseite der Holzwerkstoffplatte aufgetragen. Auch die auf die Oberseite aufgetragene sechste und siebente Harzschicht können jeweils Fasern oder Glaskugeln enthalten.

Es ist noch anzumerken, dass zu sämtlichen Harzschichten jeweils Additive, wie Härter, Netzmittel, Entschäumer, Trennmittel und/oder weitere Komponenten zugegeben werden können.

Die jeweils auf der Oberseite und Unterseite der Holzwerkstoffplatte aufgetragene sechste und siebente Harzschicht (als abschließende Schichten) werden jeweils in mindestens einer weiteren dem jeweiligen Auftragswerk zugeordneten Trocknungsvorrichtung getrocknet. Das Trocknen der jeweiligen Harzschichten erfolgt bevorzugt auf eine Restfeuchte von 6-9 Gew% z.B. in einem Umlufttrockner.

In dem sich an den letzten Trocknungsschritt anschließenden Pressschritt erfolgt ein Verpressen des Schichtaufbaus unter Druck- und Temperatureinfluss in einer Kurztaktpresse bei Temperaturen zwischen 150 und 250°C, bevorzugt zwischen 180 und 230°C, insbesondere bevorzugt bei 200°C und einem Druck zwischen 100 und 1000 N/cm², bevorzugt 300 und 700 N/cm², insbesondere bevorzugt zwischen 400 und 600 N/cm².

Die bereits oben erwähnte Dekorschicht kann mittels Direktdruck aufgetragen werden. Im Falle eines Direktdruckes erfolgt der Auftrag einer wasserbasierten, pigmentierten Druckfarbe im Tiefdruck- oder im Digitaldruckverfahren, wobei die wasserbasierte pigmentierte Druckfarbe in mehr als einer Schicht auftragbar ist, z.B. in Form von zwei bis zehn Schichten, bevorzugt drei bis acht Schichten.

Im Falle des Direktdrucks erfolgt der Auftrag der mindestens einen Dekorschicht wie erwähnt mittels eines analogen Tiefdruck- und/oder eines Digitaldruckverfahrens. Das Tiefdruckverfahren ist eine Drucktechnik, bei der die abzubildenden Elemente als Vertiefungen einer Druckform vorliegen, die vor dem Druck eingefärbt wird. Die Druckfarbe befindet sich vornehmlich in den Vertiefungen und wird aufgrund des Anpressdruckes der Druckform und von Adhäsionskräften auf den zu bedruckenden Gegenstand, wie z.B. eine Holzfaserträgerplatte, übertragen. Hingegen wird beim Digitaldruck das Druckbild direkt von einem Computer in eine Druckmaschine, wie z.B. einen Laserdrucker oder Tintenstrahldrucker übertragen. Dabei entfällt die Verwendung einer statischen Druckform. In beiden Verfahren ist die Verwendung von wässrigen Farben und Tinten oder farbgebender Mittel auf UV-Basis möglich. Ebenfalls ist es vorstellbar, die genannten Drucktechniken aus Tief- und Digitaldruck zu kombinieren. Eine geeignete Kombination der Drucktechniken kann zum einen unmittelbar auf der Trägerplatte bzw. der zu bedruckenden Schicht erfolgen oder auch vor dem Drucken durch Anpassung der verwendeten elektronischen Datensätze.

Es ist ebenfalls möglich, dass zwischen der Holzwerkstoffplatte bzw. Trägerplatte und der mindestens eine Dekorschicht mindestens eine Grundierungsschicht angeordnet ist.

Die dabei bevorzugt verwendete Grundierungsschicht umfasst eine Zusammensetzung aus Kasein als Bindemittel und anorganische Pigmente, insbesondere anorganische Farbpigmente. Als Farbpigmente können in der Grundierungsschicht weiße Pigmente wie Titandioxid verwendet werden oder aber auch weitere Farbpigmente, wie Calciumcarbonat, Bariumsulfat oder Bariumcarbonat. Die Grundierung kann neben den Farbpigmenten und dem Kasein noch Wasser als Lösemittel enthalten. Es ist ebenfalls bevorzugt, wenn die aufgetragene pigmentierte Grundschicht aus mindestens einer, bevorzugt aus mindestens zwei, insbesondere bevorzugt aus mindestens vier nacheinander aufgetragenen Lagen bzw. Aufträgen besteht, wobei die Auftragsmenge zwischen den Lagen bzw. Aufträgen gleich oder verschieden sein kann.

Das vorliegende Verfahren ermöglicht somit die Herstellung einer abriebfesten mit einer Dekorschicht versehenen Holzwerkstoffplatte mit einem Harzaufbau mit abriebfesten Partikeln. Die mit einer Dekorschicht versehene Holzwerkstoffplatte umfasst einen Harzaufbau aus erster und zweiter jeweils abriebfeste Partikel enthaltenden Harzschicht auf der Oberseite, einer dazu korrespondierenden Harzschicht auf der Unterseite, mindestens einer dritten Harzschicht auf der Oberseite und einer dazu korrespondierenden Harzschicht auf Unterseite der Holzwerkstoffplatte, mindestens einer vierten, fünften, sechsten und siebenten Harzschicht auf der Oberseite und jeweils dazu korrespondierenden Harzschichten auf der Unterseite der Holzwerkstoffplatte, wobei in der auf der Oberseite der Holzwerkstoffplatte vorgesehenen vierten bis siebten Harzschicht jeweils Glaskugeln enthalten sein können.

In einer bevorzugten Ausführungsform ermöglicht das vorliegende Verfahren die Herstellung einer abriebfesten Holzwerkstoffplatte mit folgendem Schichtaufbau (von unten nach oben gesehen): Gegenzug aus sechs Harzschichten - Holzwerkstoffplatte - Grundierungsschicht - Druckdekorschicht - erste Harzschicht mit Zellulosefasern - Schicht aus abriebfesten Partikeln - zweite Harzschicht - dritte Harzschicht - vierte Harzschicht mit Glaskugeln - fünfte Harzschicht mit Glaskugeln - sechste Harzschicht mit Glaskugeln - siebente Harzschicht mit Glaskugeln.

Die Produktionslinie zur Durchführung des vorliegenden Verfahrens umfasst folgende Elemente:
- mindestens eine erste Auftragsvorrichtung zum Auftragen einer ersten Harzschicht auf die Oberseite der Holzwerkstoffplatte, wobei vor der ersten Auftragsvorrichtung keine aktive Trocknungsvorrichtung vorgesehen ist,
- mindestens eine in Verarbeitungsrichtung hinter der ersten Auftragsvorrichtung angeordnete Vorrichtung zum Aufstreuen einer vorbestimmten Menge an abriebfesten Partikeln;
- mindestens eine in Verarbeitungsrichtung hinter der ersten Auftragsvorrichtung und Streuvorrichtung angeordnete zweite Auftragsvorrichtung zum Auftragen einer zweiten Harzschicht auf die Oberseite der Holzwerkstoffplatte,
- wobei zwischen der Streuvorrichtung und der zweiten Auftragsvorrichtung keine Trocknungsvorrichtung vorgesehen ist;
- mindestens eine in Verarbeitungsrichtung hinter der zweiten Auftragsvorrichtung angeordnete erste Trocknungsvorrichtung zum Trocknen des Schichtaufbaus aus erster und zweiter Harzschicht;
- mindestens eine in Verarbeitungsrichtung hinter der ersten Trocknungsvorrichtung angeordnete weitere Auftragsvorrichtung zum Auftragen einer weiteren Harzschicht auf die Oberseite und/oder Unterseite der Trägerplatte und anschließender Trocknungsvorrichtung zum Trocknen der weiteren oberen und/oder unteren Harzschicht, und
- eine in Verarbeitungsrichtung hinter der letzten Trocknungsvorrichtung angeordnete Kurztaktpresse (KT-Presse).

In der erfindungsgemäße Produktionslinie ist somit vor der ersten Auftragsvorrichtung keine Trocknungsvorrichtung vorgesehen ist oder für den Fall, dass eine Trocknungsvorrichtung als Teil der Produktionslinie installiert ist, ist diese Trocknungsvorrichtung nicht in Betrieb, d.h. nicht aktiv.

Auch ist zwischen der Streuvorrichtung und der zweiten Auftragsvorrichtung keine Trocknungsvorrichtung vorgesehen. Vielmehr wird die noch feuchte Platte nach Verlassen der Streuvorrichtung unmittelbar in die zweite Auftragsvorrichtung eingeführt.

In einer Variante der Produktionslinie ist die zweite Auftragsvorrichtung zum Auftragen der zweiten Harzschicht als Doppelauftragswerk ausgebildet ist, so dass gleichzeitig bzw. parallel mit der zweiten Harzschicht auf der Oberseite eine korrespondierende Harzschicht auf die Unterseite der Holzwerkstoffplatte aufgetragen wird.
Erfindungsgemäß umfasst die Produktionslinie mindestens eine in Verarbeitungsrichtung hinter der ersten Trocknungsvorrichtung angeordnete weitere Auftragsvorrichtung zum Auftragen von weiteren Harzschichten auf die Oberseite und/oder Unterseite der Trägerplatte und anschließende Trocknungsvorrichtungen zum Trocknen der weiteren oberen und/oder unteren Harzschichten.

In einer Ausführungsform umfasst die vorliegende Produktionslinie insgesamt ein einfaches, einseitiges Auftragswerk zum Auftragen der ersten Harzschicht auf die Oberseite der bedruckten Holzwerkstoffplatte und sechs Doppelauftragswerke zum Auftragen von sechs weiteren Harzschichten auf die Oberseite und Unterseite der Holzwerkstoffplatte, wobei hinter jedem Doppelauftragswerk mindestens eine Trocknungsvorrichtung zum Trocknen der oberen und/oder unteren Harzschicht vorgesehen ist.

Die Produktionslinie umfasst ebenfalls erfindungsgemäß eine in Verarbeitungsrichtung hinter der letzten Trocknungsvorrichtung angeordnete Kurztaktpresse (KT-Presse).

In einer bevorzugten Ausführungsform umfasst die Produktionslinie zur Durchführung des vorliegenden Verfahrens folgende Elemente:
- mindestens eine erste Auftragsvorrichtung zum Auftragen einer ersten Harzschicht, die ggf. Fasern enthalten kann, auf die Oberseite der Holzwerkstoffplatte;
- mindestens eine in Verarbeitungsrichtung hinter der ersten Auftragsvorrichtung angeordnete Vorrichtung zum Aufstreuen einer vorbestimmten Menge an abriebfesten Partikeln;
- mindestens eine in Verarbeitungsrichtung hinter der ersten Auftragsvorrichtung und Streuvorrichtung angeordnete zweite Auftragsvorrichtung zum Auftragen einer zweiten Harzschicht auf die Oberseite der Holzwerkstoffplatte,
- mindestens eine in Verarbeitungsrichtung hinter der zweiten Auftragsvorrichtung angeordnete erste Trocknungsvorrichtung zum Trocknen des Schichtaufbaus aus erster und zweiter Harzschicht;
- mindestens eine in Verarbeitungsrichtung hinter der ersten Trocknungsvorrichtung angeordnete dritte Auftragsvorrichtung zum Auftragen einer dritten Harzschicht auf die Oberseite und/oder einer Harzschicht parallel auf die Unterseite der Trägerplatte,
- mindestens eine in Verarbeitungsrichtung hinter der dritten Auftragsvorrichtung angeordnete weitere Trocknungsvorrichtung zum Trocknen der dritten oberen und/oder korrespondierenden unteren Harzschicht;
- mindestens eine in Verarbeitungsrichtung hinter der weiteren Trocknungsvorrichtung angeordnete vierte Auftragsvorrichtung zum Auftragen einer vierten Harzschicht auf die Oberseite, die zum Beispiel Glaskugeln enthalten kann, und/oder einer Harzschicht parallel auf die Unterseite der Trägerplatte (ohne Glaskugeln),
- mindestens eine in Verarbeitungsrichtung hinter der vierten Auftragsvorrichtung angeordnete Trocknungsvorrichtung zum Trocknen der vierten oberen und/oder korrespondierenden unteren Harzschicht;
- mindestens eine in Verarbeitungsrichtung hinter der Trocknungsvorrichtung angeordnete fünfte Auftragsvorrichtung zum Auftragen einer fünften Harzschicht, die zum Beispiel Glaspartikel bzw. Glaskugeln enthalten kann, auf die Oberseite und/oder einer Harzschicht parallel auf die Unterseite der Trägerplatte (ohne Glaskugeln oder Fasern);
- mindestens eine in Verarbeitungsrichtung hinter der fünften Auftragsvorrichtung angeordnete Trocknungsvorrichtung zum Trocknen der fünften oberen und/ oder korrespondierenden unteren Harzschicht;
- mindestens eine in Verarbeitungsrichtung hinter der Trocknungsvorrichtung angeordnete sechste Auftragsvorrichtung zum Auftragen einer sechsten Harzschicht auf die Oberseite und/oder einer Harzschicht parallel auf die Unterseite der Trägerplatte
- mindestens eine in Verarbeitungsrichtung hinter der sechsten Auftragsvorrichtung angeordnete Trocknungsvorrichtung zum Trocknen der sechsten oberen und/ oder korrespondierenden unteren Harzschicht;
- mindestens eine in Verarbeitungsrichtung hinter der Trocknungsvorrichtung angeordnete siebente Auftragsvorrichtung zum Auftragen einer siebten Harzschicht auf die Oberseite und/oder einer Harzschicht parallel auf die Unterseite der Trägerplatte
- mindestens eine in Verarbeitungsrichtung hinter der siebten Auftragsvorrichtung angeordnete Trocknungsvorrichtung zum Trocknen der siebten oberen und/ oder korrespondierenden unteren Harzschicht;
- mindestens eine in Verarbeitungsrichtung hinter der letzten Trocknungsvorrichtung angeordnete Kurztaktpresse.

Die in der vorliegenden Produktionslinie vorgesehene Streuvorrichtung für die abriebfesten Partikel ist geeignet zum Streuen von Pulver, Granula, Fasern und umfasst ein oszillierendes Bürstensystem. Die Streuvorrichtung besteht im Wesentlichen aus einem Vorratstrichter, einer sich drehenden, strukturierten Walze und einem Abstreifer. Dabei wird über die Drehgeschwindigkeit der Walze die Auftragsmenge an abriebfesten Material bestimmt. Die Streuvorrichtung umfasst bevorzugt eine Stachelwalze.

In einer Ausführungsform der vorliegenden Produktionslinie ist zudem vorgesehen, dass die mindestens eine Streuvorrichtung von mindestens einer Kabine, die mit mindestens einem Mittel zum Entfernen von in der Kabine auftretenden Stäuben versehen ist, umgeben ist bzw. in dieser angeordnet ist. Das Mittel zum Entfernen der Stäube kann in Form einer Absaugvorrichtung oder auch als Vorrichtung zum Einblasen von Luft ausgebildet sein. Das Einblasen von Luft kann über Düsen erreicht werden, die am Plattenein- und auslauf installiert sind und Luft in die Kabine einblasen. Zusätzlich können diese verhindern, dass durch Luftbewegungen ein inhomogener Streuvorhang an abriebfesten Material entsteht.

Die Entfernung des Staubes aus abriebfesten Material aus der Umgebung der Streuvorrichtung ist vorteilhaft, da neben der offensichtlich gesundheitlichen Belastung für die an der Produktionslinie tätigen Arbeiter der Feinstaub aus abriebfesten Partikeln sich auch auf anderen Anlagenteilen der Produktionslinie ablegt und zu erhöhten Verschleiß der selbigen führt. Die Anordnung der Streuvorrichtung in einer Kabine dient daher nicht nur der Reduzierung der gesundheitlichen Staubbelastung der Umgebung der Produktionslinie, sondern beugt auch einem vorzeitigen Verschleiß vor.

Die Streuvorrichtung wird bevorzugter Weise durch eine Lichtschranke gesteuert, wobei die Lichtschranke in Verarbeitungsrichtung vor der unterhalb der Streuvorrichtung vorgesehenen Walze (Streuwalze) angeordnet ist. Die Steuerung der Streuvorrichtung durch eine Lichtschranke ist sinnvoll, das sich zwischen den einzelnen Holzwerkstoffplatten mehr oder weniger große Lücken befinden, Diese startet den Streuprozess sobald sich eine Platte vor der Streuwalze befindet.

In einer Ausführungsform der vorliegenden Streuvorrichtung ist vor der Streuwalze mindestens ein Trichter zum Auffangen von überschüssigen abriebfesten Partikeln (d.h. nicht auf der mindestens einen Holzwerkstoffplatte aufgestreuten, sondern vielmehr vor dem Einfahren der Holzwerkstoffplatte mit Hilfe der Transportvorrichtung unter die Streuwalze vor derselbigen herunterfallende abriebfeste Partikel) vorgesehen.

In einer weitergehenden Variante ist der Trichter mit mindestens einer Fördereinrichtung und einer Siebvorrichtung gekoppelt, wobei das in dem Trichter aufgefangene überschüssige abriebfeste Material über die Fördereinrichtung zu der Siebvorrichtung transportiert wird. Die Siebmaschen der Siebvorrichtung entsprechen dem größten verwendeten Korn des abriebfesten Partikelmaterials (d.h. ca. 80-100 um). In der Siebvorrichtung werden Schmutzpartikel und verklumptes Material (wie verklumptes Harz oder verklumptes abriebfestes Material) von dem aufgefangenen abriebfesten Material abgetrennt und das gesiebte abriebfeste Material kann in die Streuvorrichtung zurückgeführt (recycelt) werden.

Die Erfindung wird nachfolgend unter Bezugnahme auf die Figuren der Zeichnungen an einem Ausführungsbeispiel näher erläutert. Es zeigen:
- Figur 1: eine schematische Darstellung einer Produktionslinie einer Holzwerkstoffplatte unter Verwendung eines konventionellen Verfahrens; und
- Figur 2: eine schematische Darstellung einer Produktionslinie einer Holzwerkstoffplatte unter Verwendung des erfindungsgemäßen Verfahrens.

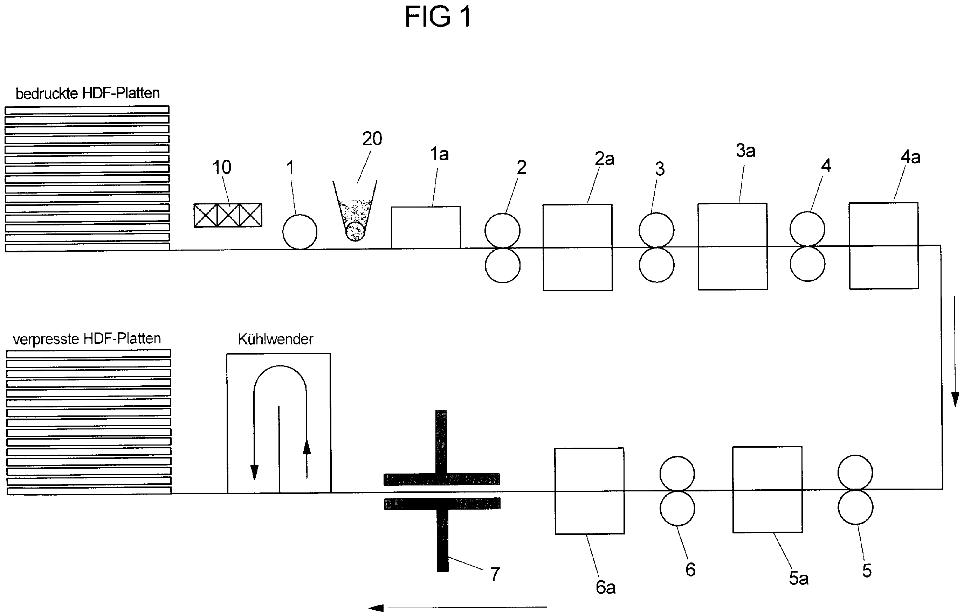

Die in der Figur 1 schematisch dargestellte konventionelle Produktionslinie umfasst einen IR-Trockner 10, ein einseitiges Auftragswerk 1, und fünf Doppelauftragsaggregate 2, 3, 4, 5, 6 zum gleichzeitigen Auftrag der jeweiligen Harzschicht auf die Oberseite und die Unterseite der vereinzelten bedruckten Werkstoffplatten z.B. von bedruckten HDF-Platten sowie jeweils vier in Verarbeitungsrichtung hinter den Auftragsaggregaten angeordnete Konvektionstrockner 1a, 2a, 3a, 4a, 5a, 6a.

Vor dem ersten Harz-Auftrag wird die Oberfläche der Platten durch den IR-Trockner 10 auf eine Temperatur ca. 45°C vorgewärmt. Das Harz wird über eine gummierte Walze im Auftragswerk auf die Plattenoberfläche aufgetragen. Das überschüssige Harz wird zurück in den Auftragsbehälter gepumpt, von dort wird es wieder zurück auf die Walzen transportiert.

Nach der ersten Auftragswalze 1 ist eine erste Streuvorrichtung 20 zum gleichmäßigen Aufstreuen des abriebfesten Materials wie z.B. Korund auf die erste Harzschicht auf der Oberseite der HDF-Platte vorgesehen. Als abriebfestes Material wird der Korund F200 eingesetzt, welches nach FEPA-Norm etwa 53-75 µm im Durchmesser misst. Die Streuvorrichtung 20 besteht im Wesentlichen aus einem Vorratstrichter, einer sich drehenden, strukturierten Stachelwalze und einem Abstreifer. Dabei wird über die Drehgeschwindigkeit der Streuwalze, die Auftragsmenge des Materials bestimmt. Auf die beharzte Platte wird je nach geforderter Abriebklasse des Produktes zwischen 12-25 g/m² Korund aufgestreut (AC4 (nach EN 13329) = 20 g/m²). Von der Stachelwalze aus fällt der Korund in einem Abstand von 5 cm auf die mit Melaminharz behandelte Platte. Da die erste Harzschicht zum Zeitpunkt des Aufstreuens noch flüssig vorliegt, können die abriebfesten Partikel in die Harzschicht einsinken. Unter der vorliegenden Streuvorrichtung ist vor der Streuwalze mindestens ein Trichter (nicht gezeigt) zum Auffangen von überschüssigen abriebfesten Partikeln (d.h. nicht auf der mindestens einen Holzwerkstoffplatte aufgestreuten, sondern vielmehr vor dem Einfahren der Holzwerkstoffplatte mit Hilfe der Transportvorrichtung unter die Streuwalze vor derselbigen herunterfallende abriebfeste Partikel) vorgesehen.

Die Trocknung der ersten Harzschicht erfolgt anschließend in dem ersten Konvektionstrockner 1a bei 150-250°C für 20-50 s.

Es schließen sich ein zweites Doppelauftragswerk 2 zum Auftragen einer zweiten Harzschicht und ein zweiter Konvektionstrockner 2a zum Trocknen der zweiten Harzschicht an.

Dem dritten Doppelauftragswerk 3 zum Auftrag der dritten Harzschicht kann eine weitere Streuvorrichtung 20 zum Auftrag von Glaskugeln auf die dritte Harzschicht nachgeordnet sein gefolgt von einem dritten Konvektionstrockner 3a zum Trocknen der dritten Harzschicht. Die Streuvorrichtung 20 für die Glaskugeln ist optional. Die Glaskugeln können auch zusammen mit der dritten Harzschicht aufgetragen werden.

Nach Auftragen der vierten bis sechsten Harzschichtin einem vierten bis sechsten Doppelauftragswerk 4, 5, 6 und Trocknen in jeweils einem Konvektionstrockner 4a, 5a, 6a wird der Schichtaufbau in einer Kurztaktpresse 7 bei einer Presstemperatur von 180-220 °C und einer Presszeit von 5 bis 25 Sekunden unter einem spezifischen Druck von 35-55 kg/cm² ausgehärtet. Die verpressten Platten werden gekühlt und gelagert.

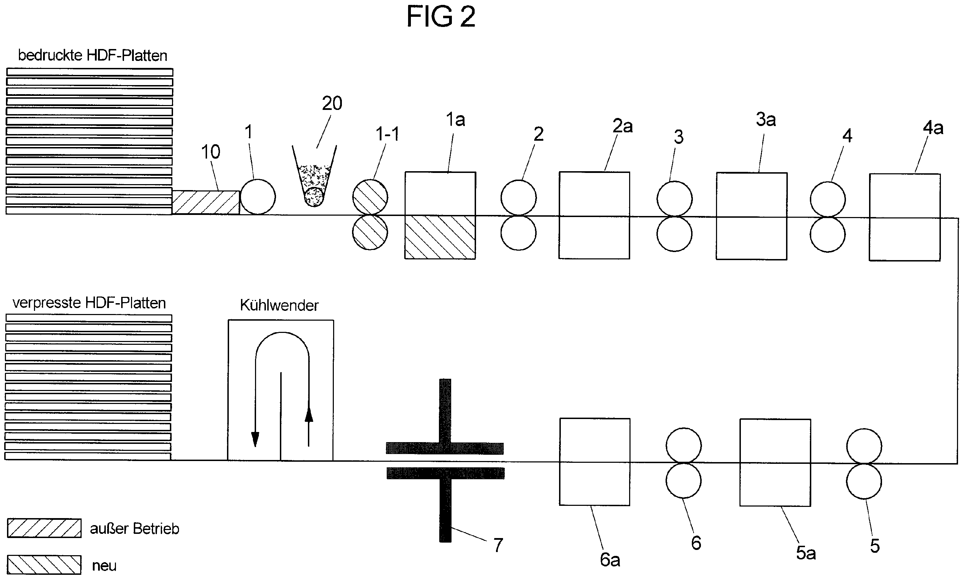

In der in Figur 2 schematisch dargestellten erfindungsgemäßen Produktionslinie ist der IR-Trockner 10 entfernt bzw. ausgeschaltet. Die Entfernung des IR-Trockners aus der Produktionslinie wird die sonst im IR-Trockner stattfindende elektrostatische Aufladung der Plattenoberfläche vermieden, was die Ausbildung eines homogenen Streuvorhanges des Korunds ermöglicht.

Des Weiteren ist in Verarbeitungsrichtung hinter dem einseitigen Auftragswerk 1 (rillierte Walze) und dem Streuer 20 ein zusätzliches doppelseitiges Auftragswerk 1-1 eingebaut, in welchem die mit Melamin-Formaldehyd-Harz und Korund beschichtete Platte mit Melamin-Formaldehyd-Harz (etwa 20 g/m²) beschichtet wird. Zeitgleich wird der nicht befestigte Korund in geringen Mengen abgetragen und reichert sich bis zur Sättigung (etwa 10 Gew.-%) in der Melaminharzflotte an. Dieser verlorene Anteil des Korundes wird nun durch den Walzenauftrag des Auftragswerkes 1-1 kontinuierlich wieder auf die Platte aufgebracht. Durch den zweiten Auftrag werden die Korundkörner mit flüssigem Harz abgedeckt bzw. in die Overlay-Schicht eingearbeitet. Dies verhindert den Abtrag des Korundes im Konvektionstrockner durch die hohe Luftverwirbelung.

Dem Auftragswerk 1-1 schließt sich ein Konvektionstrockner 1a gefolgt von den weiteren Doppelauftragsaggregaten 2, 3, 4, 5, 6 zum gleichzeitigen Auftrag der jeweiligen Harzschicht auf die Oberseite und die Unterseite der vereinzelten bedruckten Werkstoffplatten sowie den jeweils in Verarbeitungsrichtung hinter den Auftragsaggregaten angeordnete Konvektionstrocknern 2a, 3a, 4a, 5a, 6a.

Durch die getroffenen Umbaumaßnahmen in der Produktionslinie der Figur 2 ergeben sich folgende Vorteile: Homogenes Streubild; kein Verlust des Korundes im Trockner; Reduzierung des Korundverbrauches für erforderliche Abriebklasse; Reduzierung der Staubbelastung der Umgebung und der offensichtlichen gesundheitlichen Belastung der Mitarbeiter; sowie Korundstaubablagerungen auf Anlagenteilen der Produktionslinie; Reduzierung der Korundablagerung auf den Transportketten und somit Einsparung zusätzlicher Materialkosten durch Austausch der Ketten.

## Patentansprüche

1. Verfahren zur Herstellung einer abriebfesten Holzwerkstoffplatte mit einer Oberseite und einer Unterseite, wobei auf der Oberseite mindestens eine Dekorschicht, insbesondere als Druckdekor, vorgesehen ist, umfassend die Schritte:
- Auftragen von mindestens einer ersten flüssigen duroplastischen Harzschicht auf die mindestens eine Dekorschicht auf der Oberseite der Holzwerkstoffplatte, wobei die mit der Dekorschicht versehene Holzwerkstoffplatte vor dem Auftrag der ersten flüssigen Harzschicht nicht erwärmt wird,
- gleichmäßiges Aufstreuen von abriebfesten Partikeln auf die erste flüssige Harzschicht auf der Oberseite der Holzwerkstoffplatte;
- wobei die mit den abriebfesten Partikeln versehene erste flüssige Harzschicht auf der Oberseite der Holzwerkstoffplatte nach dem Auftrag nicht getrocknet wird, und
- Auftragen von mindestens einer zweiten Harzschicht auf die mit den abriebfesten Partikeln versehene erste, flüssige feuchte Harzschicht auf der Oberseite der Holzwerkstoffplatte,
- anschließendes Trocknen des Aufbaus aus erster Harzschicht und zweiter Harzschicht auf der Oberseite der Holzwerkstoffplatte in mindestens einer Trocknungsvorrichtung.

2. Verfahren nach Anspruch 1, **dadurch gekennzeichnet, dass** die erste Harzschicht in einer Menge zwischen 10-100 g/m², bevorzugt 40-80 g/m², insbesondere bevorzugt 45- 60 g/m² aufgetragen wird.

3. Verfahren nach einem der vorhergehenden Ansprüche, **dadurch gekennzeichnet, dass** die Menge an aufgestreuten abriebfesten Partikeln 10 bis 50 g/m², bevorzugt 10 bis 30 g/m², insbesondere bevorzugt 15 bis 25 g/m² beträgt.

4. Verfahren nach einem der vorhergehenden Ansprüche, **dadurch gekennzeichnet, dass** die zweite auf die Oberseite der Holzwerkstoffplatte aufzutragende Harzschicht in einer Menge zwischen 10 - 50 g/m², bevorzugt 20-30 g/m², insbesondere bevorzugt 20-25 g/m² aufgetragen wird.

5. Verfahren nach einem der vorhergehenden Ansprüche, **dadurch gekennzeichnet, dass** mindestens eine weitere Harzschicht, bevorzugt eine dritte, vierte, fünfte und sechste Harzschicht, auf die getrocknete mit den abriebfesten Partikeln versehene erste und zweite Harzschicht auf der Oberseite der Holzwerkstoffplatte aufgetragen wird und jeweils nach dem Auftrag getrocknet wird.

6. Verfahren nach Anspruch 5, **dadurch gekennzeichnet, dass** die mindestens eine weitere Harzschicht Glaskugeln und/oder Fasern, insbesondere Holzfasern oder Zellulosefasern, umfasst.

7. Verfahren nach einem der vorhergehenden Ansprüche, **dadurch gekennzeichnet, dass** mindestens eine Harzschicht auf die Unterseite der Holzwerkstoffplatte zusammen mit der auf die Oberseite der Holzwerkstoffplatte aufzutragenden zweiten Harzschicht aufgetragen wird.

8. Verfahren nach einem der vorhergehenden Ansprüche, **dadurch gekennzeichnet, dass** die mindestens eine Holzwerkstoffplatte eine mitteldichte Faser (MDF)-, hochdichte Faser (HDF)- oder Grobspan (OSB)- oder Sperrholzplatte und/oder eine Holz-Kunststoff-Platte ist.

9. Produktionslinie zur Durchführung eines Verfahrens nach einem der vorhergehenden Ansprüche umfassend
- mindestens eine erste Auftragsvorrichtung zum Auftragen einer ersten Harzschicht auf die Oberseite der Holzwerkstoffplatte, wobei vor der ersten Auftragsvorrichtung keine aktive Trocknungsvorrichtung vorgesehen ist,
- mindestens eine in Verarbeitungsrichtung hinter der ersten Auftragsvorrichtung angeordnete Vorrichtung zum Aufstreuen einer vorbestimmten Menge an abriebfesten Partikeln;
- mindestens eine in Verarbeitungsrichtung hinter der ersten Auftragsvorrichtung und Streuvorrichtung angeordnete zweite Auftragsvorrichtung zum Auftragen einer zweiten Harzschicht auf die Oberseite der Holzwerkstoffplatte,
- wobei zwischen der Streuvorrichtung und der zweiten Auftragsvorrichtung keine Trocknungsvorrichtung vorgesehen ist;
- mindestens eine in Verarbeitungsrichtung hinter der zweiten Auftragsvorrichtung angeordnete erste Trocknungsvorrichtung zum Trocknen des Schichtaufbaus aus erster und zweiter Harzschicht;
- mindestens eine in Verarbeitungsrichtung hinter der ersten Trocknungsvorrichtung angeordnete weitere Auftragsvorrichtung zum Auftragen einer weiteren Harzschicht auf die Oberseite und/oder Unterseite der Trägerplatte und anschließender Trocknungsvorrichtung zum Trocknen der weiteren oberen und/oder unteren Harzschicht, und
- eine in Verarbeitungsrichtung hinter der letzten Trocknungsvorrichtung angeordnete Kurztaktpresse (KT-Presse).

10. Produktionslinie nach Anspruch 9, **dadurch gekennzeichnet, dass** die zweite Auftragsvorrichtung zum Auftragen der zweiten Harzschicht als Doppelauftragswerk ausgebildet ist, so dass gleichzeitig mit der zweiten Harzschicht auf der Oberseite eine Harzschicht auf die Unterseite der Holzwerkstoffplatte aufgetragen wird.

11. Produktionslinie nach einem der Ansprüche 9 bis 10, **gekennzeichnet durch** ein einfaches, einseitiges Auftragswerk zum Auftragen der ersten Harzschicht auf die Oberseite der bedruckten Holzwerkstoffplatte und sechs Doppelauftragswerke zum Auftragen von sechs weiteren Harzschichten auf die Oberseite und Unterseite der Holzwerkstoffplatte, wobei hinter jedem Doppelauftragswerk mindestens eine Trocknungsvorrichtung zum Trocknen der oberen und/oder unteren Harzschicht vorgesehen ist.

12. Produktionslinie nach einem der Ansprüche 9 bis 11, **gekennzeichnet durch**
- mindestens eine in Verarbeitungsrichtung hinter der ersten Trocknungsvorrichtung angeordnete dritte Auftragsvorrichtung zum Auftragen einer dritten Harzschicht auf die Oberseite und/oder einer Harzschicht parallel auf die Unterseite der Trägerplatte,
- mindestens eine in Verarbeitungsrichtung hinter der dritten Auftragsvorrichtung angeordnete weitere Trocknungsvorrichtung zum Trocknen der dritten oberen und/oder korrespondierenden unteren Harzschicht;
- mindestens eine in Verarbeitungsrichtung hinter der weiteren Trocknungsvorrichtung angeordnete vierte Auftragsvorrichtung zum Auftragen einer vierten Harzschicht auf die Oberseite, die zum Glaskugeln enthalten kann, und/oder einer Harzschicht parallel auf die Unterseite der Trägerplatte ,
- mindestens eine in Verarbeitungsrichtung hinter der vierten Auftragsvorrichtung angeordnete Trocknungsvorrichtung zum Trocknen der vierten oberen und/oder korrespondierenden unteren Harzschicht;
- mindestens eine in Verarbeitungsrichtung hinter der Trocknungsvorrichtung angeordnete fünfte Auftragsvorrichtung zum Auftragen einer fünften Harzschicht, die Glaskugeln enthalten kann, auf die Oberseite und/oder einer Harzschicht parallel auf die Unterseite der Trägerplatte ;
- mindestens eine in Verarbeitungsrichtung hinter der fünften Auftragsvorrichtung angeordnete Trocknungsvorrichtung zum Trocknen der fünften oberen und/ oder korrespondierenden unteren Harzschicht;
- mindestens eine in Verarbeitungsrichtung hinter der Trocknungsvorrichtung angeordnete sechste Auftragsvorrichtung zum Auftragen einer sechsten Harzschicht auf die Oberseite und/oder einer Harzschicht parallel auf die Unterseite der Trägerplatte
- mindestens eine in Verarbeitungsrichtung hinter der sechsten Auftragsvorrichtung angeordnete Trocknungsvorrichtung zum Trocknen der sechsten oberen und/ oder korrespondierenden unteren Harzschicht;
- mindestens eine in Verarbeitungsrichtung hinter der Trocknungsvorrichtung angeordnete siebente Auftragsvorrichtung zum Auftragen einer siebten Harzschicht auf die Oberseite und/oder einer Harzschicht parallel auf die Unterseite der Trägerplatte
- mindestens eine in Verarbeitungsrichtung hinter der siebten Auftragsvorrichtung angeordnete Trocknungsvorrichtung zum Trocknen der siebten oberen und/ oder korrespondierenden unteren Harzschicht.

## Claims

1. Method for producing an abrasion-resistant wood-based panel with an upper side and a lower side, wherein at least one decorative layer, in particular as a printed decor, is provided on the upper side, comprising the steps
- applying at least one first liquid thermosetting resin layer to the at least one decorative layer on the upper side of the wood-based panel, wherein the wood-based panel provided with the decorative layer is not heated before the application of the first liquid resin layer,
- even scattering of abrasion-resistant particles on the first liquid resin layer on the top of the wood-based panel,
- wherein the first liquid resin layer provided with the abrasion-resistant particles on the top surface of the wood-based panel is not dried after application, and
- applying at least a second layer of resin to the first, liquid, wet resin layer on the upper side of the wood-based panel, which is provided with the abrasion-resistant particles,
- subsequent drying of the structure consisting of the first resin layer and the second resin layer on the top side of the wood-based panel in at least one drying device.

2. Method according to claim 1, **characterized in that** the first resin layer is applied in an amount between 10-100 g/m², preferably 40-80 g/m², in particular preferably 45-60 g/m².

3. Method according to one of the preceding claims, **characterized in that** the amount of scattered abrasion-resistant particles is 10 to 50 g/m², preferably 10 to 30 g/m², in particular preferably 15 to 25 g/m².

4. Method according to one of the preceding claims, **characterized in that** the second resin layer to be applied to the upper side of the wood-based panel is applied in an amount of between 10-50 g/m², preferably 20-30 g/m², in particular preferably 20-25 g/m².

5. Method according to one of the preceding claims, **characterized in that** at least one further resin layer, preferably a third, fourth, fifth and sixth resin layer, is applied to the dried first and second resin layer provided with the abrasion-resistant particles on the upper side of the wood-based panel and is dried after each application.

6. Method according to claim 5, **characterised in that** the at least one further resin layer comprises glass beads and/or fibres, in particular wood fibres or cellulose fibres.

7. Method according to any of the preceding claims, **characterized in that** at least one resin layer is applied to the underside of the wood-based panel together with the second resin layer to be applied to the upper side of the wood-based panel.

8. Method according to any of the preceding claims, **characterized in that** the at least one wood-based panel is a medium density fibre (MDF), high density fibre (HDF) or coarse particleboard (OSB) or plywood panel and/or a wood-plastic panel.

9. Production line for carrying out a process according to one of the preceding claims comprising
- at least a first application device for applying a first resin layer to the top side of the wood-based panel, wherein no active drying device is provided in front of the first application device,
- at least one device arranged downstream of the first application device in the processing direction for scattering a predetermined quantity of abrasion-resistant particles;
- at least one second application device arranged downstream of the first application device and scattering device in the processing direction for applying a second resin layer to the top side of the wood-based panel,
- wherein no drying device is provided between the scattering device and the second application device;
- at least one first drying device arranged downstream of the second application device in the processing direction for drying the layered structure of first and second resin layers;
- at least one further application device arranged downstream of the first drying device in the processing direction for applying a further resin layer to the upper and/or lower side of the carrier board and subsequent drying device for drying the further upper and/or lower resin layer, and
- a short-cycle press (KT press) arranged downstream of the last drying device in the processing direction.

10. Production line according to claim 9, **characterized in that** the second application device for applying the second resin layer is designed as a double application device, so that a resin layer is applied to the lower side of the wood-based panel simultaneously with the second resin layer on the upper side.

11. Production line according to one of claims 9 to 10, **characterized by** a simple, single-sided applicator for applying the first resin layer to the upper side of the printed wood-based panel and six double applicators for applying six further resin layers to the upper side and lower side of the wood-based panel, wherein at least one drying device for drying the upper and/or lower resin layer is provided behind each double applicator.

12. Production line according to any one of claims 9 to 11, **characterized by**
- at least one third application device arranged downstream of the first drying device in the direction of processing for applying a third resin layer to the upper side and/or a resin layer parallel to the lower side of the carrier board,
- at least one further drying device arranged behind the third application device in the processing direction for drying the third upper and/or corresponding lower resin layer;
- at least one fourth application device arranged downstream of the further drying device in the direction of processing for applying a fourth resin layer to the upper side, which may contain glass beads, and/or a resin layer parallel to the underside of the carrier board,
- at least one drying device arranged downstream of the fourth application device in the processing direction for drying the fourth upper and/or corresponding lower resin layer;
- at least one fifth application device, arranged downstream of the drying device in the processing direction, for applying a fifth resin layer, which may contain glass beads, to the upper side and/or a resin layer parallel to the underside of the carrier board;
- at least one drying device arranged downstream of the fifth application device in the processing direction for drying the fifth upper and/or corresponding lower resin layer;
- at least one sixth application device arranged downstream of the drying device in the processing direction for applying a sixth resin layer to the upper side and/or a resin layer parallel to the underside of the carrier board,
- at least one drying device arranged behind the sixth application device in the processing direction for drying the sixth upper and/or corresponding lower resin layer;
- at least one seventh application device arranged downstream of the drying device in the processing direction for applying a seventh resin layer to the top side and/or a resin layer parallel to the underside of the carrier board,
- at least one drying device arranged behind the seventh application device in the processing direction for drying the seventh upper and/or corresponding lower resin layer.

## Revendications

1. Procédé de fabrication d'une plaque de matériau dérivé du bois résistante à l'usure avec un côté supérieur et un côté inférieur, dans lequel au moins une couche de décor, en particulier un décor imprimé, est prévue sur le côté supérieur, comprenant les étapes :
- l'application d'au moins une première couche de résine duroplastique liquide sur l'au moins une couche de décor sur le côté supérieur de la plaque de matériau dérivé du bois, dans lequel la plaque de matériau dérivé du bois pourvue de la couche de décor n'est pas chauffée avant l'application de la première couche de résine liquide,
- la diffusion uniforme de particules résistantes à l'usure sur la première couche de résine liquide sur le côté supérieur de la plaque de matériau dérivé du bois ;
- dans lequel la première couche de résine liquide pourvue de particules résistantes à l'usure sur le côté supérieur de la plaque de matériau dérivé du bois après l'application n'est pas séchée, et
- l'application d'au moins une seconde couche de résine sur la première couche de résine humide liquide pourvue de particules résistantes à l'usure sur le côté supérieur de la plaque de matériau dérivé du bois,
- le séchage consécutif de la structure de la première couche de résine et la seconde couche de résine sur le côté supérieur de la plaque de matériau dérivé du bois dans au moins un dispositif de séchage.

2. Procédé selon la revendication 1, **caractérisé en ce que** la première couche de résine est appliquée dans une quantité entre 10 et 100 g/m², de préférence 40 et 80 g/m², en particulier de préférence 45 et 60 g/m².

3. Procédé selon l'une des revendications précédentes, **caractérisé en ce que** la quantité de particules résistantes à l'usure diffusées est comprise entre 10 et 50 g/m², de préférence 10 et 30 g/m², en particulier de préférence 15 et 25 g/m².

4. Procédé selon l'une des revendications précédentes, **caractérisé en ce que** la seconde couche de résine à appliquer sur le côté supérieur de la plaque de matériau dérivé du bois est appliquée dans une quantité entre 10 et 50 g/m², de préférence 20 et 30 g/m², en particulier de préférence 20 et 25 g/m².

5. Procédé selon l'une des revendications précédentes, **caractérisé en ce qu'**au moins une autre couche de résine, de préférence une troisième, quatrième, cinquième et sixième couches de résine, est appliquée sur la première et deuxième couche de résine pourvues des particules résistantes à l'usure séchées sur le côté supérieur de la plaque de matériau dérivé du bois et est séchée respectivement après l'application.

6. Procédé selon la revendication 5, **caractérisé en ce que** l'au moins une autre couche de résine comporte des billes de verre et/ou des fibres, en particulier des fibres de bois ou fibres de cellulose.

7. Procédé selon l'une des revendications précédentes, **caractérisé en ce qu'**au moins une couche de résine est appliquée sur le côté inférieur de la plaque de matériau dérivé du bois conjointement avec la deuxième couche de résine à appliquer sur le côté supérieur de la plaque de matériau dérivé du bois.

8. Procédé selon l'une des revendications précédentes, **caractérisé en ce que** l'au moins une plaque de matériau dérivé du bois est une plaque en fibre de bois à moyenne densité (MDF), à haute densité (HDF) ou à fibres orientées (OSB) ou de contreplaqué et/ou une plaque de matière plastique et bois.

9. Ligne de production pour la réalisation d'un procédé selon l'une des revendications précédentes, comprenant
- au moins un premier dispositif d'application pour l'application d'une première couche de résine sur le côté supérieur de la plaque de matériau dérivé du bois, dans laquelle aucun dispositif de séchage actif n'est prévu avant le premier dispositif d'application,
- au moins un dispositif agencé dans le sens de traitement derrière le premier dispositif d'application pour la diffusion d'une quantité prédéterminée de particules résistantes à l'usure ;
- au moins un second dispositif d'application agencé dans le sens de traitement derrière le premier dispositif d'application et le dispositif de diffusion pour l'application d'une deuxième couche de résine sur le côté supérieur de la plaque de matériau dérivé du bois,
- dans laquelle aucun dispositif de séchage n'est prévu entre le dispositif de diffusion et le second dispositif d'application ;
- au moins un premier dispositif de séchage agencé dans le sens de traitement derrière le second dispositif d'application pour le séchage de la structure stratifiée de la première et deuxième couche de résine ;
- au moins un autre dispositif d'application agencé dans le sens de traitement derrière le premier dispositif de séchage pour l'application d'une autre couche de résine sur le côté supérieur et/ou le côté inférieur de la plaque porteuse et le dispositif de séchage consécutif pour le séchage de l'autre couche de résine supérieure et/ou inférieure, et
- une presse à cycle court (presse KT) agencée dans le sens de traitement derrière le dernier dispositif de séchage.

10. Ligne de production selon la revendication 9, **caractérisée en ce que** le second dispositif d'application est réalisé pour l'application de la deuxième couche de résine comme dispositif à double application de sorte que simultanément à la deuxième couche de résine sur le côté supérieur une couche de résine soit appliquée sur le côté inférieur de la plaque de matériau dérivé du bois.

11. Ligne de production selon l'une des revendications 9 et 10, **caractérisée par** un simple dispositif d'application unilatéral pour l'application de la première couche de résine sur le côté supérieur de la plaque de matériau dérivé du bois imprimée et six dispositifs à double application pour l'application de six autres couches de résine sur le côté supérieur et le côté inférieur de la plaque de matériau dérivé du bois, dans laquelle au moins un dispositif de séchage est prévu derrière chaque dispositif à double application pour le séchage de la couche de résine supérieure et/ou inférieure.

12. Ligne de production selon l'une des revendications 9 à 11, **caractérisée par**
- au moins un troisième dispositif d'application agencé dans le sens de traitement derrière le premier dispositif de séchage pour l'application d'une troisième couche de résine sur le côté supérieur et/ou d'une couche de résine parallèlement au côté inférieur de la plaque porteuse,
- au moins un autre dispositif de séchage agencé dans le sens de traitement derrière le troisième dispositif d'application pour le séchage de la troisième couche de résine supérieure et/ou inférieure correspondante ;
- au moins un quatrième dispositif d'application agencé dans le sens de traitement derrière l'autre dispositif de séchage pour l'application d'une quatrième couche de résine sur le côté supérieur qui peut contenir des billes de verre, et/ou d'une couche de résine parallèlement au côté inférieur de la plaque porteuse,
- au moins un dispositif de séchage agencé dans le sens de traitement derrière le quatrième dispositif d'application pour le séchage de la quatrième couche de résine supérieure et/ou inférieure correspondante ;
- au moins un cinquième dispositif d'application agencé dans le sens de traitement derrière le dispositif de séchage pour l'application d'une cinquième couche de résine qui peut contenir des billes de verre, sur le côté supérieur et/ou d'une couche de résine parallèlement au côté inférieur de la plaque porteuse ;
- au moins un dispositif de séchage agencé dans le sens de traitement derrière le cinquième dispositif d'application pour le séchage de la cinquième couche de résine supérieure et/ou inférieure correspondante ;
- au moins un sixième dispositif d'application agencé dans le sens de traitement derrière le dispositif de séchage pour l'application d'une sixième couche de résine sur le côté supérieur et/ou d'une couche de résine parallèlement au côté inférieur de la plaque porteuse ;
- au moins un dispositif de séchage agencé dans le sens de traitement derrière le sixième dispositif d'application pour le séchage de la sixième couche de résine supérieure et/ou inférieure correspondante ;
- au moins un septième dispositif d'application agencé dans le sens de traitement derrière le dispositif de séchage pour l'application d'une septième couche de résine sur le côté supérieur et/ou d'une couche de résine parallèlement au côté inférieur de la plaque porteuse ;
- au moins un dispositif de séchage agencé dans le sens de traitement derrière le septième dispositif d'application pour le séchage de la septième couche de résine inférieure supérieure et/ou inférieure correspondante.
